# EUROPÄISCHE PATENTSCHRIFT

(11) **EP 3 339 137 B1**
(45) Veröffentlichungstag und Bekanntmachung des Hinweises auf die Patenterteilung: **29.01.2020**
(21) Anmeldenummer: 17204365.5
(22) Anmeldetag: 29.11.2017
(51) Int. Cl.: B62D 6/00, B62D 9/00

(54) **LENKUNTERSTÜTZUNGSSYSTEM FÜR EIN LANDWIRTSCHAFTLICHES FAHRZEUG**
STEERING SUPPORT SYSTEM FOR AN AGRICULTURAL VEHICLE
SYSTÈME D'AIDE À LA DIRECTION POUR UN VÉHICULE AGRICOLE

(30) Priorität: 20.12.2016 DE 102016225630
(43) Veröffentlichungstag der Anmeldung: 27.06.2018
(73) Patentinhaber: Deere & Company, Moline, IL 61265 (US)
(72) Erfinder: Weber, Uwe, 68163 Mannheim (DE)
(74) Vertreter: Dehnhardt, Florian Christopher

(56) Entgegenhaltungen:
- EP-A2- 2 886 419
- DE-A1-102007 045 781
- DE-A1-102008 055 900
- DE-A1-102011 084 288

## Beschreibung

Die Erfindung betrifft ein Lenkunterstützungssystem für ein landwirtschaftliches Fahrzeug.

Landwirtschaftliche Fahrzeuge sind meist mit einer als starre Pendelachse ausgebildeten Vorderachse ausgestattet. Bauliche Beschränkungen durch umgebende Fahrzeugteile führen dazu, dass der Freiraum daran angebrachter lenkbarer Vorderräder zumindest auf der eingependelten Achsseite abhängig vom jeweiligen Lenkeinschlagwinkel mehr oder weniger eingeschränkt ist. Unter ungünstigen Bedingungen kann es daher zu einem unerwünschten Kontakt zwischen dem betreffenden Vorderrad und den umgebenden Fahrzeuteilen kommen. Dokument DE102007045781 A zeigt ein landwirtschaftliches Fahrzeug gemäß der Präambel des Anspruchs 1.

Es ist daher Aufgabe der vorliegenden Erfindung, ein Lenkunterstützungssystem für ein landwirtschaftliches Fahrzeug anzugeben, das die Möglichkeit eines unerwünschten Kontakts zwischen den lenkbaren Vorderrädern und den umgebenden Fahrzeugteilen für den Fall einer als starre Pendelachse ausgebildeten Vorderachse maßgeblich verringert.

Diese Aufgabe wird durch ein Lenkunterstützungssystem mit den Merkmalen des Patentanspruchs 1 gelöst.

Das Lenkunterstützungssystem für ein landwirtschaftliches Fahrzeug umfasst eine gegenüber einer tragenden Fahrzeugstruktur pendelnd aufgehängte Starrachse, an der lenkbare Räder angeordnet sind, einen Lenkwinkelsensor zur Ermittlung eines an den lenkbaren Rädern vorliegenden Lenkeinschlagwinkels, einen Pendelwinkelsensor zur Ermittlung eines an der Starrachse gegenüber der tragenden Fahrzeugstruktur vorliegenden Pendelwinkels, eine Stellanordnung zur Beeinflussung des Lenkeinschlagwinkels, und eine Kontrolleinheit, die nach Maßgabe des ermittelten Pendelwinkels unter Berücksichtigung baulicher Beschränkungen einen für den Lenkeinschlagwinkel zulässigen Schwellenwert berechnet, wobei die Kontrolleinheit für den Fall, dass der ermittelte Lenkeinschlagwinkel einen für den Schwellenwert vorgegebenen Toleranzbereich überschreitet, durch Ansteuerung der Stellanordnung Lenkeingriffe im Sinne einer Verringerung des Lenkeinschlagwinkels mit dem Ziel durchführt, dass der zulässige Schwellenwert eingehalten wird.

Auf diese Weise kann durch entsprechende Vorgabe des Schwellenwerts die Wahrscheinlichkeit eines unerwünschten Kontakts der lenkbaren Räder mit den umgebenden Fahrzeugteilen maßgeblich verringert werden. Hierbei wählt die Kontrolleinheit für den Schwellenwert einen umso niedrigeren Betrag, je stärker die Starrachse eingependelt, also gegenüber der Fahrzeughorizontalen quergestellt ist, wobei für jede der beiden möglichen Lenkrichtungen der lenkbaren Räder unterschiedliche Schwellenwerte vorgegeben sein können. Der Zusammenhang zwischen sensorisch ermitteltem Pendelwinkel und jeweiligem Schwellenwert kann in Gestalt einer entsprechenden Steuerkurve in der Kontrolleinheit hinterlegt sein. Die Steuerkurve trägt hierbei den spezifischen baulichen Beschränkungen wie auch der Spurbreite des betreffenden landwirtschaftlichen Fahrzeugs im Bereich der lenkbaren Räder Rechnung. Der zulässige Schwellenwert gilt dann als eingehalten, wenn der Lenkeinschlagwinkel diesen einnimmt oder aber unterschreitet.

Bei dem landwirtschaftlichen Fahrzeug handelt es sich beispielsweise um einen landwirtschaftlichen Traktor, wobei die Starrachse als Vorderachse ausgebildet ist, an der lenkbare Vorderräder angebracht sind. Denkbar ist eine Verwendung jedoch auch im Zusammenhang mit anderen landwirtschaftliche Fahrzeugen, sofern diese eine mit lenkbaren Rädern ausgestattete Pendelachse aufweisen. Vorteilhafte Weiterbildungen des erfindungsgemäßen Lenkunterstützungssystems gehen aus den Unteransprüchen hervor.

Vorzugsweise ist die Stellanordnung Bestandteil einer Überlagerungslenkung des landwirtschaftlichen Fahrzeugs, wobei die Lenkeingriffe durch Verstellen der lenkbaren Räder und/oder einer zur Beeinflussung des Lenkeinschlagwinkels vorgesehenen Lenkhandhabe erfolgen. Eine derartige Überlagerungslenkung ist bei landwirtschaftlichen Fahrzeugen des Herstellers John Deere unter der Bezeichnung "AutoTrac" bekannt. Die Lenkeingriffe erfolgen hier automatisiert durch Einsteuerung eines entsprechenden Hydraulikdrucks an einem zur Verstellung der lenkbaren Räder vorgesehenen hydraulischen Lenkzylinder.

Erfindungsgemäß können die Lenkeingriffe auch durch Aufprägung eines Bedienmoments an einer zur Beeinflussung des Lenkeinschlagwinkels vorgesehenen Lenkhandhabe des landwirtschaftlichen Fahrzeugs derart erfolgen, dass ein Bediener der Lenkhandhabe zu einer Verringerung des Lenkeinschlagwinkels veranlasst wird. Bei der Lenkhandhabe handelt es sich üblicherweise um ein Lenkrad, das zur Beeinflussung des Lenkeinschlagwinkels mit einem Lenkorbitrol zusammenwirkt, das seinerseits der Ansteuerung eines zur Verstellung der lenkbaren Räder vorgesehenen hydraulischen Lenkzylinders dient. Die Aufprägung des Bedienmoments erfolgt beispielsweise seitens eines elektromotorischen Drehmomentgebers, wobei mittels des Drehmomentgebers an der Lenkhandhabe in Richtung einer Vergrößerung des Lenkeinschlagwinkels ein (progressiv) zunehmendes und in Richtung einer Verringerung des Lenkeinschlagwinkels ein (progressiv) abnehmendes Bedienmoment hervorgerufen werden kann, sodass der Bediener einen unmissverständlichen Hinweis erhält, den Lenkeinschlagwinkel durch Betätigung der Lenkhandhabe entsprechend zu verringern. Die Durchführung des eigentlichen Lenkeingriffs bleibt somit dem Bediener überlassen, sodass dieser jederzeit die Kontrolle über die Lenkung des landwirtschaftlichen Fahrzeugs behält.

Da vorrangig beim Befahren unebenen Geländes merkliche Pendelwinkel auftreten, die Durchführung der vorgenannten Lenkeingriffe während einer Straßenfahrt aus Gründen der Fahrstabilität zudem unterbleiben sollte, besteht die Möglichkeit, dass die Ansteuerung der Stellanordnung nur dann erfolgt, wenn die Kontrolleinheit feststellt, dass ein für einen Ackerbetrieb charakteristischer Fahrzeugbetriebszustand vorliegt.

Die Kontrolleinheit kann hierbei auf das Vorliegen eines für einen Ackerbetrieb charakteristischen Fahrzeugbetriebszustands durch Auswertung einer momentanen Fahrtgeschwindigkeit und/oder Getriebeübersetzung des landwirtschaftlichen Fahrzeugs, einer momentanen Fahrzeugposition, und/oder von Größen, die den Betriebszustand von zur Feldbearbeitung vorgesehenen Aggregaten charakterisieren, schließen. Hierbei wird die aus GPS-Informationen gewonnene momentane Fahrzeugposition von der Kontrolleinheit mit kartographierten Geländedaten verglichen, in denen Ackerflächen, Wirtschaftswege und dergleichen verzeichnet sind. Bei den zur Feldbearbeitung vorgesehenen Aggregaten kann es sich ferner um eine Zapfwelle, einen Dreipunkt-Kraftheber, oder um Einrichtungen zur Durchführung diverser Bodenbearbeitungsfunktionen handeln, wobei letztere einem an dem landwirtschaftlichen Fahrzeug anbringbaren Anbaugerät zugeordnet sein können. Im Falle eines ISOBUS-fähigen Anbaugeräts lässt sich der jeweilige Betriebszustand unschwer über eine mit der Kontrolleinheit kommunizierende ISOBUS-Schnittstelle auslesen.

Des Weiteren kann die Ansteuerung der Stellanordnung unter dem Vorbehalt einer über eine Nutzerschnittstelle an die Kontrolleinheit übermittelten Bedienerfreigabe erfolgen. Im einfachsten Fall handelt es sich bei der Nutzerschnittstelle um ein Bedienelement, über das sich die mittels des Lenkunterstützungssystems ausgeführte Funktion an- und abschalten lässt.

Bei manchen landwirtschaftlichen Fahrzeugen ist die Starrachse gegenüber der tragenden Fahrzeugstruktur zusätzlich gefedert aufgehängt, wobei die Kontrolleinheit die Berechnung des für den Lenkeinschlagwinkel zulässigen Schwellenwerts nach Maßgabe einer mittels eines Lagesensors ermittelten Achsposition gegenüber der tragenden Fahrzeugstruktur modifizieren kann, um die insofern auftretende Veränderung des den lenkbaren Rädern zur Verfügung stehenden Freiraums entsprechend zu berücksichtigen.

Ähnliche Betrachtungen gelten hinsichtlich der Geometrie von an den lenkbaren Rädern verwendeten Reifen, insbesondere im Hinblick auf deren Breite und/oder Durchmesser, die sich aus dem Reifentyp oder dem Reifenmodell ergibt. Insofern ist es möglich, dass die Kontrolleinheit bei der Berechnung des für den Lenkeinschlagwinkel zulässigen Schwellenwerts den verwendeten Reifentyp oder das verwendete Reifenmodell berücksichtigt. Dies kann unter Einbeziehung des Reifenfülldrucks sowie der sich daraus ergebenden Werte für Breite und/oder Durchmesser des Reifens erfolgen. Die Angaben hinsichtlich des Reifenfülldrucks werden beispielsweise seitens eines Reifendrucküberwachungssystems oder einer zentralen Reifenfüllanlage bereitgestellt.

Der Reifentyp oder das Reifenmodell kann hierbei über eine mit der Kontrolleinheit kommunizierende Nutzerschnittstelle eingebbar sein, beispielsweise über eine von dieser umfasste berührungsempfindliche Anzeigeoberfläche, über die der Reifentyp bzw. das Reifenmodell aus einer für das betreffende landwirtschaftliche Fahrzeug vorgesehenen Liste bedienerseitig auswählbar ist.

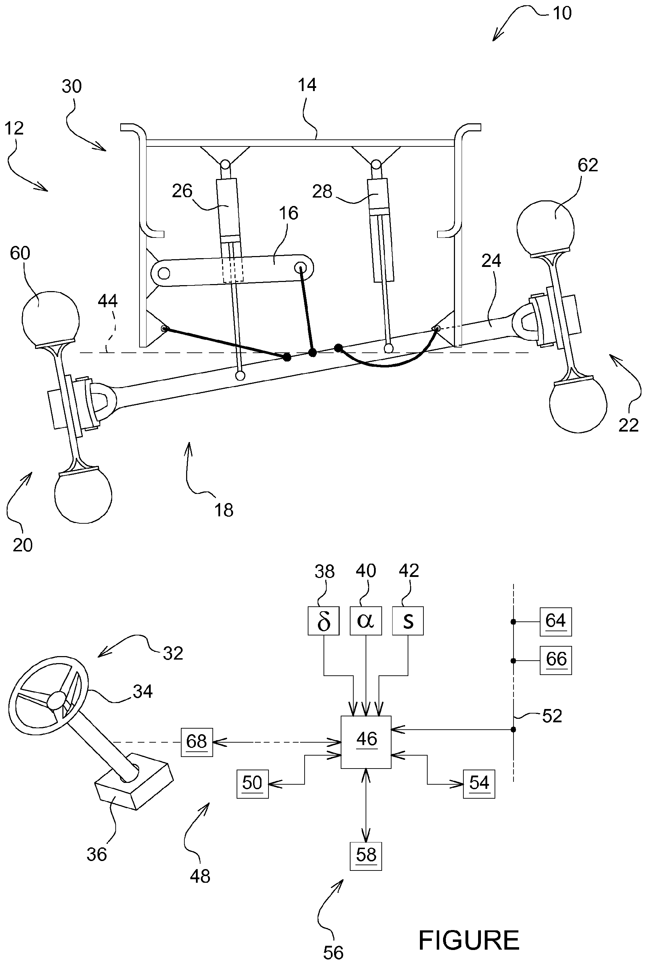

Das erfindungsgemäße Lenkunterstützungssystem für ein landwirtschaftliches Fahrzeug wird im Folgenden anhand der beigefügten Zeichnung näher erläutert.

Dabei zeigt die einzige Figur ein Ausführungsbeispiel des erfindungsgemäßen Lenkunterstützungssystems eines landwirtschaftlichen Fahrzeugs, bei dem es sich beispielsgemäß um einen nicht im Detail dargestellten landwirtschaftlichen Traktor handelt.

Das in dem landwirtschaftlichen Traktor 10 untergebrachte Lenkunterstützungssystem 12 umfasst eine gegenüber einer tragenden Fahrzeugstruktur 14 pendelnd über einen Querlenker 16 aufgehängte Starrachse 18 mit lenkbaren Rädern 20, 22. Bei der Starrachse 18 handelt es sich im vorliegenden Fall um eine Vorderachse 24 des landwirtschaftlichen Traktors 10, die mittels zugehöriger Hydraulikzylinder 26, 28 gegenüber der tragenden Fahrzeugstruktur 14 in vertikaler Richtung gefedert aufgehängt ist. Die Hydraulikzylinder 26, 28 sind Bestandteil einer hydraulischen Vorderachsfederung 30, wie sie aus der DE 196 43 263 A1 hervorgeht. Die lenkbaren Räder 20, 22 sind über jeweilige Achsschenkel an den Enden der Vorderachse 24 angebracht, wobei sich diese mittels einer Lenkhandhabe 32 bedienerseitig bezüglich ihres Lenkeinschlags verstellen lassen. Bei der Lenkhandhabe 32 handelt es sich um ein Lenkrad 34, das zur Beeinflussung des Lenkeinschlagwinkels δ mit einem Lenkorbitrol 36 zusammenwirkt, das seinerseits der Ansteuerung eines zur Verstellung der lenkbaren Räder 20, 22 vorgesehenen (nicht gezeigten) hydraulischen Lenkzylinders dient.

Des Weiteren ist ein Lenkwinkelsensor 38 zur Ermittlung eines an den lenkbaren Rädern 20, 22 vorliegenden Lenkeinschlagwinkels δ, ein Pendelwinkelsensor 40 zur Ermittlung eines an der Vorderachse 24 gegenüber der tragenden Fahrzeugstruktur 14 vorliegenden Pendel- bzw. Oszillationswinkels a, sowie ein Lagesensor 42 zur Ermittlung einer Achsposition s gegenüber der tragenden Fahrzeugstruktur 14 vorhanden. Der Pendel- bzw. Oszillationswinkel α bezeichnet hierbei eine Querneigung der Vorderachse 24 gegenüber der Fahrzeughorizontalen 44. Die von den Sensoren 38, 40, 42 erzeugten Signale werden an eine mikroprozessorgesteuerte Kontrolleinheit 46 zur weiteren Auswertung übermittelt.

Eine Stellanordnung 48 erlaubt eine Beeinflussung des Lenkeinschlagwinkels δ durch Ausführung entsprechender Lenkeingriffe. Die Stellanordnung 48 ist vorliegend Bestandteil einer Überlagerungslenkung 50 des landwirtschaftlichen Traktors 10, wobei die Lenkeingriffe durch Verstellen der lenkbaren Räder 20, 22 und/oder des zur Beeinflussung des Lenkeinschlagwinkels δ vorgesehenen Lenkrads 34 erfolgen. Eine derartige Überlagerungslenkung 50 ist bei landwirtschaftlichen Traktoren des Herstellers John Deere unter der Bezeichnung "AutoTrac" bekannt. Die Lenkeingriffe erfolgen hier automatisiert durch Einsteuerung eines entsprechenden Hydraulikdrucks an dem zur Verstellung der lenkbaren Räder 20, 22 vorgesehenen hydraulischen Lenkzylinder.

Die Kontrolleinheit 46 berechnet nach Maßgabe des ermittelten Pendelwinkels α sowie der ermittelten Achsposition s unter Berücksichtigung baulicher Beschränkungen einen für den Lenkeinschlagwinkel δ zulässigen Schwellenwert. Stellt die Kontrolleinheit 46 fest, dass der ermittelte Lenkeinschlagwinkel δ einen für den Schwellenwert vorgegebenen Toleranzbereich überschreitet, führt diese durch entsprechende Ansteuerung der Stellanordnung 48 Lenkeingriffe im Sinne einer Verringerung des Lenkeinschlagwinkels δ mit dem Ziel durch, dass der zulässige Schwellenwert eingehalten wird. Der zulässige Schwellenwert gilt dann als eingehalten, wenn der Lenkeinschlagwinkel δ diesen einnimmt oder aber unterschreitet.

Durch entsprechende Vorgabe des Schwellenwerts kann die Wahrscheinlichkeit eines unerwünschten Kontakts der lenkbaren Räder 20, 22 mit den umgebenden Fahrzeugteilen maßgeblich verringert werden. Hierbei wählt die Kontrolleinheit 46 für den Schwellenwert einen umso niedrigeren Betrag, je stärker die Vorderachse 24 eingependelt, also gegenüber der Fahrzeughorizontalen 44 quergestellt ist, wobei für jede der beiden möglichen Lenkrichtungen der lenkbaren Räder 20, 22 unterschiedliche Schwellenwerte vorgegeben sein können. Der Zusammenhang zwischen sensorisch ermitteltem Pendelwinkel α und jeweiligem Schwellenwert ist in Gestalt einer entsprechenden Steuerkurve in der Kontrolleinheit 46 hinterlegt. Die Steuerkurve trägt hierbei den spezifischen baulichen Beschränkungen wie auch der Spurbreite des betreffenden landwirtschaftlichen Traktors 10 im Bereich der lenkbaren Räder 20, 22 Rechnung.

Da vorrangig beim Befahren unebenen Geländes merkliche Pendelwinkel α auftreten, die Durchführung der vorgenannten Lenkeingriffe während einer Straßenfahrt aus Gründen der Fahrstabilität zudem unterbleiben sollte, erfolgt die Ansteuerung der Stellanordnung 48 nur dann, wenn die Kontrolleinheit 46 feststellt, dass ein für einen Ackerbetrieb charakteristischer Fahrzeugbetriebszustand vorliegt.

Die Kontrolleinheit 46 schließt auf das Vorliegen eines für einen Ackerbetrieb charakteristischen Fahrzeugbetriebszustands durch Auswertung einer momentanen Fahrtgeschwindigkeit und/oder Getriebeübersetzung des landwirtschaftlichen Traktors 10, einer momentanen Fahrzeugposition, und/oder von Größen, die den Betriebszustand von zur Feldbearbeitung vorgesehenen Aggregaten charakterisieren. Hierbei wird die aus GPS-Informationen gewonnene momentane Fahrzeugposition von der Kontrolleinheit 46 mit kartographierten Geländedaten verglichen, in denen Ackerflächen, Wirtschaftswege und dergleichen verzeichnet sind. Bei den zur Feldbearbeitung vorgesehenen Aggregaten kann es sich ferner um eine Zapfwelle, einen Dreipunkt-Kraftheber, oder um Einrichtungen zur Durchführung diverser Bodenbearbeitungsfunktionen handeln, wobei letztere einem an dem landwirtschaftlichen Traktor 10 anbringbaren Anbaugerät zugeordnet sein können. Die entsprechenden Informationen stehen auf einem (CAN-)Datenbus 52 des landwirtschaftlichen Traktors 10 zur Verfügung, im Falle eines ISOBUS-fähigen Anbaugeräts lässt sich dessen jeweiliger Betriebszustand zudem über eine mit der Kontrolleinheit 46 kommunizierende ISOBUS-Schnittstelle 54 auslesen.

Des Weiteren erfolgt die Ansteuerung der Stellanordnung 48 unter dem Vorbehalt einer über eine Nutzerschnittstelle 56 an die Kontrolleinheit 46 übermittelten Bedienerfreigabe. Bei der Nutzerschnittstelle 56 handelt es sich um ein auf einer berührungsempfindlichen Anzeigeoberfläche 58 eingeblendetes Bedienelement, über das sich die mittels des Lenkunterstützungssystems 12 ausgeführte Funktion an- und abschalten lässt.

Die Geometrie von an den lenkbaren Rädern 20, 22 verwendeten Reifen 60, 62, insbesondere deren Breite und/oder Durchmesser, die sich aus dem Reifentyp oder dem Reifenmodell ergibt, hat gleichfalls Einfluss auf den den lenkbaren Rädern 20, 22 zur Verfügung stehenden Freiraum. Die Kontrolleinheit 46 berücksichtigt daher bei der Berechnung des für den Lenkeinschlagwinkel δ zulässigen Schwellenwerts zusätzlich den verwendeten Reifentyp bzw. das verwendete Reifenmodell. Dies erfolgt unter Einbeziehung des Reifenfülldrucks sowie der sich daraus ergebenden Werte für Breite und/oder Durchmesser des Reifens 60, 62. Die Angaben hinsichtlich des Reifenfülldrucks werden seitens eines Reifendrucküberwachungssystems 64 oder einer zentralen Reifenfüllanlage 66 über den (CAN-)Datenbus 52 des landwirtschaftlichen Traktors 10 bereitgestellt.

Der Reifentyp bzw. das Reifenmodell ist über die mit der Kontrolleinheit 46 kommunizierende Nutzerschnittstelle 56 eingebbar, genauer gesagt über die von dieser umfasste berührungsempfindliche Anzeigeoberfläche 58, über die der Reifentyp bzw. das Reifenmodell aus einer für den betreffenden landwirtschaftlichen Traktor 10 vorgesehenen Liste bedienerseitig auswählbar ist.

Gemäß einer alternativen Ausführungsform des Lenkunterstützungssystems 12 erfolgen die Lenkeingriffe durch Aufprägung eines Bedienmoments an dem zur Beeinflussung des Lenkeinschlagwinkels δ vorgesehenen Lenkrad 34, und zwar derart, dass ein Bediener des Lenkrads 34 zu einer Verringerung des Lenkeinschlagwinkels δ veranlasst wird. Die Aufprägung des Bedienmoments erfolgt beispielsweise seitens eines elektromotorischen Drehmomentgebers 68, wobei mittels des Drehmomentgebers 68 an dem Lenkrad 34 in Richtung einer Vergrößerung des Lenkeinschlagwinkels δ ein (progressiv) zunehmendes und in Richtung einer Verringerung des Lenkeinschlagwinkels δ ein (progressiv) abnehmendes Bedienmoment hervorgerufen wird, sodass der Bediener einen unmissverständlichen Hinweis erhält, den Lenkeinschlagwinkel δ durch Betätigung des Lenkrads 34 entsprechend zu verringern. Die Durchführung des eigentlichen Lenkeingriffs bleibt somit dem Bediener überlassen, sodass dieser jederzeit die Kontrolle über die Lenkung des landwirtschaftlichen Traktors 10 behält.

## Patentansprüche

1. Lenkunterstützungssystem für ein landwirtschaftliches Fahrzeug, mit einer gegenüber einer tragenden Fahrzeugstruktur (14) pendelnd aufgehängten Starrachse (18), an der lenkbare Räder (20, 22) angeordnet sind, einem Lenkwinkelsensor (38) zur Ermittlung eines an den lenkbaren Rädern (20, 22) vorliegenden Lenkeinschlagwinkels (δ), einem Pendelwinkelsensor (40) zur Ermittlung eines an der Starrachse)18) gegenüber der tragenden Fahrzeugstruktur (14) vorliegenden Pendelwinkels (α), einer Stellanordnung (48) zur Beeinflussung des Lenkeinschlagwinkels (δ), und einer Kontrolleinheit (46), die nach Maßgabe des ermittelten Pendelwinkels (α) unter Berücksichtigung baulicher Beschränkungen einen für den Lenkeinschlagwinkel (δ) zulässigen Schwellenwert berechnet, wobei die Kontrolleinheit (46) für den Fall, dass der ermittelte Lenkeinschlagwinkel (δ) einen für den Schwellenwert vorgegebenen Toleranzbereich überschreitet, durch Ansteuerung der Stellanordnung (48) Lenkeingriffe im Sinne einer Verringerung des Lenkeinschlagwinkels (δ) mit dem Ziel durchführt, dass der zulässige Schwellenwert eingehalten wird, **dadurch gekennzeichnet, dass** die Lenkeingriffe durch Aufprägung eines Bedienmoments an einer zur Beeinflussung des Lenkeinschlagwinkels (δ) vorgesehenen Lenkhandhabe (32) des landwirtschaftlichen Fahrzeugs (10) derart erfolgen, dass ein Bediener der Lenkhandhabe (32) zu einer Verringerung des Lenkeinschlagwinkels (δ) veranlasst wird.

2. Lenkunterstützungssystem nach Anspruch 1, **dadurch gekennzeichnet, dass** die Ansteuerung der Stellanordnung (48) nur dann erfolgt, wenn die Kontrolleinheit (46) feststellt, dass ein für einen Ackerbetrieb charakteristischer Fahrzeugbetriebszustand vorliegt.

3. Lenkunterstützungssystem nach Anspruch 2, **dadurch gekennzeichnet, dass** die Kontrolleinheit (46) auf das Vorliegen eines für einen Ackerbetrieb charakteristischen Fahrzeugbetriebszustands durch Auswertung einer momentanen Fahrtgeschwindigkeit und/oder Getriebeübersetzung des landwirtschaftlichen Fahrzeugs (10), einer momentanen Fahrzeugposition, und/oder von Größen, die den Betriebszustand von zur Feldbearbeitung vorgesehenen Aggregaten charakterisieren, schließt.

4. Lenkunterstützungssystem nach wenigstens einem der Ansprüche 1 bis 3, **dadurch gekennzeichnet, dass** die Ansteuerung der Stellanordnung (48) unter dem Vorbehalt einer über eine Nutzerschnittstelle (56) an die Kontrolleinheit (46) übermittelten Bedienerfreigabe erfolgt.

5. Lenkunterstützungssystem nach wenigstens einem der Ansprüche 1 bis 4, **dadurch gekennzeichnet, dass** die Starrachse (18) gegenüber der tragenden Fahrzeugstruktur (14) zusätzlich gefedert aufgehängt ist, wobei die Kontrolleinheit (46) die Berechnung des für den Lenkeinschlagwinkel (δ) zulässigen Schwellenwerts nach Maßgabe einer mittels eines Lagesensors (42) ermittelten Achsposition (s) gegenüber der tragenden Fahrzeugstruktur (14) modifiziert.

6. Lenkunterstützungssystem nach wenigstens einem der Ansprüche 1 bis 5, **dadurch gekennzeichnet, dass** die Kontrolleinheit (46) bei der Berechnung des für den Lenkeinschlagwinkel (δ) zulässigen Schwellenwerts einen verwendeten Reifentyp oder ein verwendetes Reifenmodell berücksichtigt.

7. Lenkunterstützungssystem nach Anspruch 6, **dadurch gekennzeichnet, dass** der Reifentyp oder das Reifenmodell über eine mit der Kontrolleinheit (46) kommunizierende Nutzerschnittstelle (56) eingebbar ist.

8. Landwirtschaftliches Fahrzeug, insbesondere landwirtschaftlicher Traktor (10), mit einem Lenkunterstützungssystem (12) nach wenigstens einem der Ansprüche 1 bis 7.

## Claims

1. Steering assistance system for an agricultural vehicle, having a rigid axle (18) suspended in a swinging manner with respect to a load-bearing vehicle structure (14) and on which steerable wheels (20, 22) are arranged, a steering angle sensor (38) for determining a steering lock angle (δ) present on the steerable wheels (20, 22), a swing angle sensor (40) for determining a swing angle (α) present on the rigid axle (18) with respect to the load-bearing vehicle structure (14), an actuating arrangement (48) for influencing the steering lock angle (δ), and a control unit (46) which, in accordance with the determined swing angle (α) and while taking structural restrictions into account, calculates a permissible threshold value for the steering lock angle (δ), wherein, for the case in which the determined steering lock angle (δ) exceeds a predefined tolerance range for the threshold value, the control unit (46) carries out steering interventions with the effect of reducing the steering lock angle (δ) by activating the actuating arrangement (48) with the aim of maintaining the permissible threshold value, **characterized in that** the steering interventions are carried out by impressing an operating torque on a steering wheel (32) of the agricultural vehicle (10) which is provided for influencing the steering lock angle (δ), in such a way that an operator of the steering wheel (32) is induced to reduce the steering lock angle (δ).

2. Steering assistance system according to Claim 1, **characterized in that** the activation of the actuating arrangement (48) is carried out only if the control unit (46) determines that a vehicle operating state characteristic of field operation is present.

3. Steering assistance system according to Claim 2, **characterized in that** the control unit (46) decides about the presence of a vehicle operating state characteristic of field operation by evaluating an instantaneous speed of travel and/or a transmission ratio of the agricultural vehicle (10), an instantaneous vehicle position and/or variables which characterize the operating state of units provided for field processing.

4. Steering assistance system according to at least one of Claims 1 to 3, **characterized in that** the activation of the actuating arrangement (48) is carried out subject to an operator enable signal transmitted to the control unit (46) via a user interface (56).

5. Steering assistance system according to at least one of Claims 1 to 4, **characterized in that** the rigid axle (18) is additionally spring-suspended with respect to the load-bearing vehicle structure (14), wherein the control unit (46) modifies the calculation of the permissible threshold value for the steering lock angle (δ) in accordance with an axle position (s) with respect to the load-bearing vehicle structure (14), determined by means of a position sensor (42).

6. Steering assistance system according to at least one of Claims 1 to 5, **characterized in that** during the calculation of the permissible threshold value for the steering lock angle (δ), the control unit (46) takes into account a tyre type used or a tyre model used.

7. Steering assistance system according to Claim 6, **characterized in that** the tyre type or the tyre model can be entered via a user interface (56) communicating with the control unit (46).

8. Agricultural vehicle, in particular agricultural tractor (10), having a steering assistance system (12) according to at least one of Claims 1 to 7.

## Revendications

1. Système d'assistance de direction pour un véhicule agricole, comprenant un essieu rigide (18) suspendu de manière oscillante par rapport à une structure de véhicule porteuse (14), essieu rigide sur lequel sont disposées des roues orientables (20, 22), un capteur d'angle de braquage (38) servant à déterminer un angle de braquage (δ) présent au niveau des roues orientables (20, 22), un capteur d'angle d'oscillation (40) servant à déterminer un angle d'oscillation (α) présent au niveau de l'essieu rigide (18) par rapport à la structure de véhicule porteuse (14), un ensemble de réglage (48) servant à influencer l'angle de braquage (δ), et une unité de contrôle (46) qui calcule une valeur seuil admissible pour l'angle de braquage (δ) en fonction de l'angle d'oscillation (α) déterminé en tenant compte de restrictions structurales, l'unité de contrôle (46) effectuant, dans le cas où l'angle de braquage (δ) déterminé dépasse une plage de tolérance prédéfinie pour la valeur seuil, des interventions de direction au sens d'une réduction de l'angle de braquage (δ) par commande de l'ensemble de réglage (48), dans le but de maintenir la valeur seuil admissible, **caractérisé en ce que** les interventions de direction s'effectuent par application d'un couple de commande à une commande manuelle de direction (32) du véhicule agricole (10), laquelle commande manuelle est prévue pour influencer l'angle de braquage (δ), de telle sorte qu'un opérateur de la commande manuelle de direction (32) soit incité à réduire l'angle de braquage (δ).

2. Système d'assistance de direction selon la revendication 1, **caractérisé en ce que** la commande de l'ensemble de réglage (48) ne s'effectue que lorsque l'unité de contrôle (46) détermine la présence d'un état de fonctionnement de véhicule caractéristique d'un fonctionnement en champ.

3. Système d'assistance de direction selon la revendication 2, **caractérisé en ce que** l'unité de contrôle (46) conclue à la présence d'un état de fonctionnement de véhicule caractéristique d'un fonctionnement en champ par évaluation d'une vitesse de conduite instantanée et/ou d'un rapport de transmission du véhicule agricole (10), d'une position de véhicule instantanée et/ou de grandeurs qui caractérisent l'état de fonctionnement d'unités prévues pour le travail du sol.

4. Système d'assistance de direction selon au moins l'une des revendications 1 à 3, **caractérisé en ce que** la commande de l'ensemble de réglage (48) s'effectue à la condition qu'une autorisation d'opérateur a été transmise à l'unité de contrôle (46) par le biais d'une interface utilisateur (56).

5. Système d'assistance de direction selon au moins l'une des revendications 1 à 4, **caractérisé en ce que** l'essieu rigide (18) est en outre suspendu sur ressort par rapport à la structure de véhicule porteuse (14), l'unité de contrôle (46) modifiant le calcul de la valeur seuil admissible pour l'angle de braquage (δ) en fonction d'une position d'essieu (s) déterminée au moyen d'un capteur de position (42) par rapport à la structure de véhicule porteuse (14).

6. Système d'assistance de direction selon au moins l'une des revendications 1 à 5, **caractérisé en ce que** l'unité de contrôle (46) prend en compte, lors du calcul de la valeur seuil admissible pour l'angle de braquage (δ), un type de pneu utilisé ou un modèle de pneu utilisé.

7. Système d'assistance de direction selon la revendication 6, **caractérisé en ce que** le type de pneu utilisé ou le modèle de pneu utilisé peut être saisi par le biais d'une interface utilisateur (56) communiquant avec l'unité de contrôle (46).

8. Véhicule agricole, en particulier tracteur agricole (10), comprenant un système d'assistance de direction (12) selon au moins l'une des revendications 1 à 7.
